# EUROPÄISCHE PATENTANMELDUNG

(11) **EP 3 238 902 A1**
(43) Veröffentlichungstag der Anmeldung: **01.11.2017**
(21) Anmeldenummer: 16000935.3
(22) Anmeldetag: 26.04.2016
(51) Int. Cl.: B29B 11/16, D04H 3/12

(54) **VERFAHREN ZUR HERSTELLUNG VON VORKONFEKTIONIERTEM HALBZEUG**

(71) Anmelder: BNP Brinkmann GmbH & Co. KG, 48477 Hörstel-Bevergern (DE)
(72) Erfinder: Pohlmeyer, Andreas, 48432 Rheine (DE); Güthe, Thomas, 48477 Hörstel-Bevergern (DE)
(74) Vertreter: Müller-Boré & Partner Patentanwälte PartG mbB

(57) **Zusammenfassung**

Die vorliegende Erfindung betrifft ein Verfahren zur Herstellung von vorkonfektioniertem Halbzeug, die Verwendung des durch das Verfahren erhältlichen vorkonfektionierten Halbzeuges zur Herstellung eines Bauteils, ein Verfahren zur Herstellung eines Bauteils, sowie einen Behälter mit vorkonfektioniertem Halbzeug.

## Beschreibung

Die vorliegende Erfindung betrifft ein Verfahren zur Herstellung von vorkonfektioniertem Halbzeug, die Verwendung des durch das Verfahren erhältlichen vorkonfektionierten Halbzeuges zur Herstellung eines Bauteils, ein Verfahren zur Herstellung eines Bauteils, sowie einen Behälter mit vorkonfektioniertem Halbzeug.

Für industrielle Anwendungen werden Fasergebilde mit einem Bindemittel getränkt, welches ein duroplastisches und/oder thermoplastisches Harz enthält, und dann zu dreidimensionalen Bauteilen verpresst. Dazu wird gemäß dem Stand der Technik zunächst ein Vlies hergestellt und anschließend in einem Nassprozess mit einer Bindemittelzusammensetzung ausgerüstet. Das derart ausgerüstete Vlies wird dann bis zu einer gewissen Restfeuchte getrocknet. Danach wird das ausgerüstete Vlies durch Warmpressen und Konfektionieren (beispielsweise durch Beschneiden, Ausschneiden und/oder Lochen) zum fertigen Bauteil verarbeitet. Warmpressen und Konfektionieren erfolgen üblicherweise in einem einzigen Arbeitsschritt, beispielsweise mittels einer Warmpressanlage, die mit Schneidwerkzeugen ausgestattet ist.

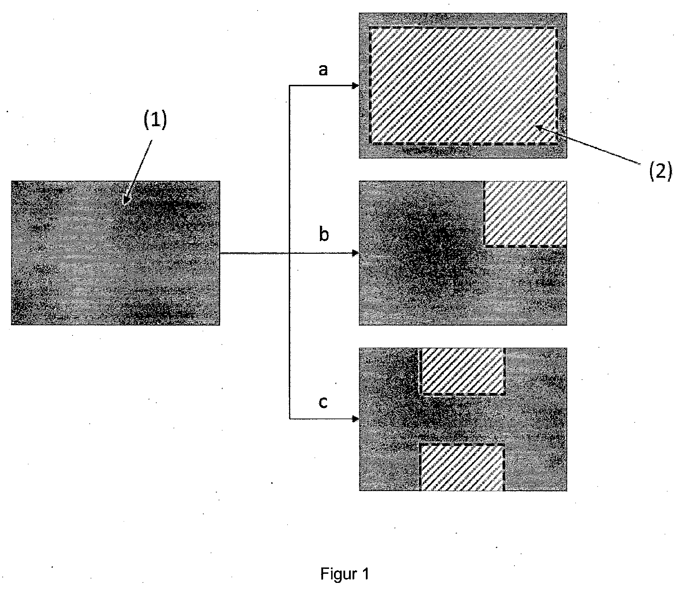

Derartige Verfahren sind beispielsweise zur Herstellung von Innenverkleidungsteilen für die Automobilindustrie geeignet. Vergleichbare Fasermatten werden z.B. als Trägermaterialien für Türinnenverkleidungen, Säulenverkleidungen oder Kofferraumverkleidungen genutzt. Hierfür kann beispielsweise eine Fasermatte mit 10 Gew.-% PES Anteil und 28 Gew.-% duroplastischem Harz, wobei der Rest aus Naturfasern besteht, verwendet werden. Ein beispielhafter Vlieszuschnitt ist ca. 1000 g schwer und hat ein Format von 100 cm × 100 cm. Das Bauteil hat nach der Verarbeitung ein Bauteilgewicht von 300 g. Ursache für den hohen Abfallanteil ist das unglückliche Bauteilformat (siehe Figur 1a).

Dieses Bauteil hat beispielsweise ein Format von 90 cm × 70 cm. Der Innenausschnitt sowie der umliegende Rahmen sind Abfall und können aufgrund der Harzausrüstung nicht mehr weiterverarbeitet oder wirtschaftlich recycelt werden. Geliefert werden die Vlieszuschnitte üblicherweise in Paketen zu 20 bis 100 Stück. Diese Pakete sind in eine Folie eingeschlagen und luftdicht verklebt. Die Pakete werden auf einer Palette gestapelt. Die komplette Palette wird dann nochmals in Folie gepackt und eingestretcht. Diese aufwändige Verpackung ist notwendig, um das Austrocknen der Vliese zu vermeiden. Ein Vlies wird von der Palette genommen und mittels einer Warmpressanlage mit einem aufgeheizten Presswerkzeug warmgepresst. Nach etwa 1 Minute werden das fertige Bauteil und die Abfälle aus dem Werkzeug entnommen und voneinander getrennt. Die Abfälle werden entsorgt und die fertigen Bauteile verpackt. Danach beginnen die Arbeitsschritte von vorne.

Ein Nachteil dieses herkömmlichen Verfahrens ist jedoch der gegebenenfalls hohe Abfallanteil beim Erstellen der Vlieszuschnitte, wobei insbesondere die Nassausrüstung mit hohen Kosten verbunden ist. Das anfallende Gemisch von Abfallfasern und gegebenenfalls gehärtetem Bindemittel kann nicht ohne Weiteres wiederverwertet werden und muss unter hohem Wertverlust entsorgt werden. Dies macht sich insbesondere bei der Herstellung von Bauteilen mit einem hohen Verschnittanteil bemerkbar. Hierbei ist der Anteil des überschüssigen Gemisches aus Abfallfasern und Bindemittel besonders hoch, wodurch das Verfahren besonders kostenintensiv und ineffizient wird.

Hinzu kommt, dass das ausgerüstete Fasergebilde/das Halbzeug an der Luft schnell austrocknet. So kann es beispielsweise bei Unterbrechungen durch ungeplante Anlagenstillstände oder Pausenzeiten nach dem Ausrüsten des Vlieses dazu kommen, dass ein ausgerüstetes Vlies vor dem Verpacken längere Zeit offenliegt, wodurch zumindest die äußeren Lagen des Vlieses austrocknen und dieses nicht mehr verarbeitet werden kann. Auch bei der Verarbeitung der Vlieszuschnitte unmittelbar nach dem Ausrüsten kann es dazu kommen, dass ein angebrochenes Paket mit Vlieszuschnitten offenliegt und austrocknet.

Das vorstehend beschriebene Verfahren führt somit zu einer hohen Ausschussrate an überschüssig verbrauchtem Bindemittel und Fasermaterial.

Der vorliegenden Erfindung liegt somit die Aufgabe zugrunde, ein Verfahren zur Herstellung von vorkonfektioniertem Halbzeug sowie ein Verfahren zur Herstellung eines Bauteils bereitzustellen, welches effizient, ressourcenschonend und wirtschaftlich sein soll.

Diese Aufgabe wird durch die in den Ansprüchen gekennzeichneten Ausführungsformen gelöst.

Insbesondere betrifft die vorliegende Erfindung ein Verfahren zur Herstellung von vorkonfektioniertem Halbzeug, umfassend die Schritte
(i) Bereitstellen eines flächigen Fasergebildes,
(ii) Konfektionieren des flächigen Fasergebildes durch Entfernen von Fasern innerhalb mindestens eines Verschnittbereiches, um Recyclingfasern und ein vorkonfektioniertes flächiges Fasergebilde mit mindestens einer Aussparung zu erhalten und
(iii) Ausrüsten des aus Schritt (ii) erhaltenen vorkonfektionierten flächigen Fasergebildes mit einem Bindemittel, um das vorkonfektionierte Halbzeug zu erhalten.

Dadurch, dass das Ausrüsten (iii) erst nach dem Konfektionieren (ii) erfolgt, ist in Schritt (iii) weniger Bindemittel erforderlich, denn die in Schritt (ii) anfallenden Recyclingfasern sind noch nicht mit Bindemittel ausgerüstet. Dadurch kann Bindemittel eingespart werden, wodurch das erfindungsgemäße Verfahren effizient, ressourcenschonend und wirtschaftlich ist. Die Recyclingfasern können wiederverwertet werden, insbesondere zur Herstellung des erfindungsgemäß verwendeten Fasergebildes.

Das flächige Fasergebilde unterliegt keiner besonderen Einschränkung. Grundsätzlich kann jedes flächige Fasergebilde, welches mit einem Bindemittel ausgerüstet werden kann und zur Herstellung von entsprechenden Bauteilen geeignet ist, verwendet werden. Unter flächigen Fasergebilden sollen im vorliegenden Zusammenhang textile Flächengebilde wie Gewebe, Gewirke oder Vliese verstanden werden. Dabei zeigt der Begriff "flächig" an, dass das flächige Fasergebilde flächenförmig ist, also zwei gegenüberliegende und im Wesentlichen parallel zueinander verlaufende Hauptoberflächen aufweist. Hauptoberflächen sind die Oberflächen mit dem größten Flächeninhalt.

Die flächigen Fasergebilde können aus Fasern, Schnitzeln, Spänen oder deren Gemischen bestehen. Vorzugsweise ist das flächige Fasergebilde ein flächiges Faservlies. Die Vliese können beispielsweise aus natürlichen oder synthetischen Fasern oder aus Gemischen von natürlichen und synthetischen Fasern sowie auch aus Spänen oder Schnitzeln aus Holz bestehen. Beispiele für natürliche Fasern sind Fruchtfasern, Samenfasern und Stengelfasern wie Sisal, Jute, Hanf, Kenaf, Flachs, Cellulose und Baumwolle sowie Bananenfasern, Wolle, Haare und Kork. Beispiele für synthetische Fasern sind Fasern aus Polyethersulfon, Polyester, Polyacrylnitril, Polyamid, Polylactid, Kohlenstoff, Polyvinylchlorid, Polyolefinen wie Polyethylen und Polypropylen sowie Aramid und anorganische Fasern wie Mineralfasern und Glasfasern. Vorzugsweise geht man von ungebundenen Vliesen aus nachwachsenden Rohstoffen aus, wie Hanf, Kenaf, Sisal, Jute oder Flachs und Gemischen dieser Fasern untereinander z.B. Gemischen aus Hanf und Kenaf oder Gemischen aus Hanf und Flachs bzw. Jute. In einer anderen bevorzugten Ausführungsform der Erfindung verwendet man Gemische aus natürlichen Fasern und synthetischen Fasern wie Polyesterfasern, Aramidfasern, Kohlenstofffasern oder Polyolefinfasern oder Gemische aus synthetischen Fasern und Glasfasern z. B. Gemische aus Polyester- und Glasfasern. Von Interesse sind außerdem Gemische aus natürlichen Fasern wie Sisal oder Hanf zusammen mit synthetischen Fasern wie Polyethersulfonfasern und/oder Polyesterfasern und/oder Glasfasern. Falls in den flächigen Fasergebilden Naturfasern eingesetzt werden, so beträgt ihr Anteil vorzugsweise mehr als 50 Gew.-%, besonders bevorzugt 55 bis 99 Gew.-%, insbesondere bevorzugt 80 bis 95 Gew.-%.

Die flächigen Fasergebilde haben beispielsweise ein Flächengewicht von 80 bis 5000 g/m², vorzugsweise von 500 bis 2000 g/m². Besonders bevorzugt beträgt das Flächengewicht der Fasergebilde 800 bis 1600 g/m².

Der erfindungsgemäße Schritt (i) des Bereitstellens eines flächigen Fasergebildes unterliegt keinen besonderen Einschränkungen. Schritt (i) kann den Herstellungsschritt des flächigen Fasergebildes umfassen. Beispielsweise können solche Gebilde durch Nasslegen, Luftlegen beziehungsweise Krempeln von Fasern und Vernadeln zu einem Vlies oder Filz, durch Weben zu einem Gewebe, oder durch Wirken zu einem Gewirke, gegebenenfalls gefolgt von einem Schritt des Bildens eines Verbundwerkstoffes (Composite) aus diesen, hergestellt werden. Der Herstellungsschritt des flächigen Fasergebildes kann ohne Unterbrechung durch beispielsweise Zwischenlagerung des Fasergebildes von Schritt (ii) des Konfektionierens gefolgt werden, das heißt das Konfektionieren kann sich direkt an die Herstellung des Fasergebildes anschließen. So kann das erfindungsgemäße Verfahren kontinuierlich durchgeführt werden. Ebenso kann das flächige Fasergebilde zunächst hergestellt und zwischengelagert werden, um es zu einem späteren Zeitpunkt dem (ii) Konfektionieren und (iii) Ausrüsten zu unterziehen.

Gemäß einer bevorzugten Ausführungsform der vorliegenden Erfindung wird das flächige Fasergebilde in Schritt (i) in Bahnenform, besonders bevorzugt in Form einer Rolle, bereitgestellt und umfasst Schritt (ii) das Konfektionieren in sich wiederholende, voneinander abgegrenzte Einheiten. Die Gesamtheit dieser zusammenhängenden Einheiten wird, sofern die Einheiten nicht vollständig voneinander getrennt sind, als Kette bezeichnet. Auf diese Weise kann auf effiziente und wirtschaftliche Weise eine Vielzahl von weitgehend gleichartigen vorkonfektionierten Fasergebilden bereitgestellt werden.

Die sich wiederholenden Einheiten ("Wiederholungseinheiten") weisen vorzugsweise eine Breite von 20 cm bis 100 cm, besonders bevorzugt 30 bis 75 cm, insbesondere bevorzugt 40 bis 60 cm auf. Die Länge der Wiederholungseinheiten beträgt vorzugsweise 30 cm bis 120 cm, besonders bevorzugt 50 bis 90 cm, insbesondere bevorzugt 65 bis 75 cm. Die Breite der Wiederholungseinheiten erstreckt sich parallel zur Breite der Bahn des flächigen Fasergebildes und die Länge der Wiederholungseinheiten erstreckt sich parallel zur Länge der Bahn.

Die Abgrenzungen zwischen den sich wiederholenden (und daher weitgehend gleichförmigen) Fasergebilden unterliegen keiner besonderen Einschränkung. Vorzugsweise sind die Fasergebilde durch eine teilweise Durchtrennung des Fasergebildes voneinander abgrenzt, wobei die Durchtrennung in Form ein Perforierung vorliegen kann. Die teilweise Durchtrennung ist besonders bevorzugt als eine Mehrzahl von Durchtrennungen beziehungsweise Perforierungen entlang der Abgrenzung zwischen den Fasergebilden ausgestaltet, vergleichbar mit der teilweisen Durchtrennung der einzelnen Blätter einer Küchenrolle oder eines Hygienepapiers. Es ist auch möglich, die Abgrenzung in der Form einer lediglich oberflächlichen Ritzung des Fasergebildes oder in Form einer aufgedruckten Markierung auszubilden. Der Zweck der Abgrenzung besteht insbesondere darin, die Abmessungen benachbarter Fasergebilde der Kette beziehungsweise Bahn oder Rolle zu kennzeichnen.

In einer bevorzugten Ausgestaltung des erfindungsgemäßen Verfahrens liegt das flächige Fasergebilde in Form einer Rolle vor, welche vor Schritt (ii) zumindest teilweise abgewickelt wird. Die Bereitstellung in Form einer Rolle erleichtert die maschinelle und damit kostengünstige und effiziente Durchführung des erfindungsgemäßen Verfahrens.

Sofern das flächige Fasergebilde in Form einer Rolle bereitgestellt wird, erfolgt nach Schritt (ii) vorzugsweise ein Schritt des Aufwickelns des vorkonfektionierten Fasergebildes zu einer (weiteren) Rolle, wodurch die maschinelle Durchführung des Verfahrens erleichtert wird. Alternativ kann aber auch im Zuge von Schritt (ii) des Konfektionierens die Rolle in eine Mehrzahl vorkonfektionierter flächiger Fasergebilde in Mattenform erfolgen. Darüber hinaus ist es möglich, dass unmittelbar nach Schritt (ii) des Konfektionierens Schritt (iii) des Ausrüstens erfolgt, ohne dazwischen das vorkonfektionierte Fasergebilde aufzuwickeln.

In Schritt (ii) wird das flächige Fasergebilde konfektioniert, um ein vorkonfektioniertes Fasergebilde mit Aussparungen zu erhalten. Konfektionieren bedeutet, dass zumindest ein Teil des nicht konfektionierten Fasergebildes innerhalb des Verschnittbereiches entfernt bzw. abgetrennt wird, wobei der abgetrennte Teil die Recyclingfasern bildet. Das Konfektionieren kann lediglich ein Beschneiden umfassen, wobei beim Beschneiden zumindest ein Teil des ursprünglichen äußeren Randes des flächigen Fasergebildes erhalten bleibt und ein oder mehrere äußere Randstücke abgeschnitten wird/werden (siehe Figur 1b und 1c). Des Weiteren kann das Konfektionieren einen Schritt des Ausschneidens umfassen, wobei entlang einer geschlossenen Schnittlinie ein äußeres Randstück des Fasergebildes abgetrennt wird. Hierbei bleibt der ursprüngliche äußere Rand des flächigen Fasergebildes nicht erhalten. Darüber hinaus kann das Fasergebilde gelocht werden, wobei entlang einer geschlossenen Schnittlinie ein innerer Teil des Fasergebildes entnommen wird. Sofern ausschließlich gelocht wird, bleibt der ursprüngliche äußere Rand des flächigen Fasergebildes erhalten (siehe Figur 1a). Das Konfektionieren kann eine Kombination von Beschneiden und Lochen oder Ausschneiden und Lochen umfassen. In jedem dieser Fälle kann mehrfach gelocht werden.

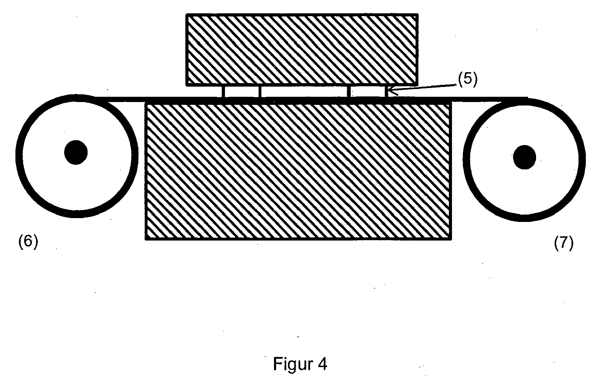

Das Konfektionieren (ii) ist auf keine besondere Weise eingeschränkt und kann grundsätzlich jedes Verfahren umfassen, welches dazu geeignet ist, zumindest einen Teil des flächigen Fasergebildes abzutrennen. Dazu zählen beispielsweise Schneiden, und Stanzen. Besonders bevorzugt wird Schritt (ii) mittels einer Brückenstanze vorgenommen, wobei mit einer Brückenstanze das Beschneiden, Ausschneiden und Lochen sowie Kombinationen daraus in einem Schritt erfolgen können. Besonders vorteilhaft wird der Schritt des Konfektionierens (ii) mittels einer Brückenstanze mit einem Bereitstellen des flächigen Fasergebildes in Rollenform verbunden, da in diesem Fall eine besonders effiziente Durchführung des Verfahrens möglich ist (siehe Figur 4). Nach Schritt (ii) und/oder nach Schritt (iii) kann das vorkonfektionierte Fasergebilde beziehungsweise das vorkonfektionierte Halbzeug grundsätzlich jede Form aufweisen. Beispielhafte Formen des vorkonfektionierten Fasergebildes beziehungsweise des vorkonfektionierten Halbzeugs sind in Figur 1 dargestellt.

Der Anteil der Masse der Recyclingfasern, bezogen auf die Masse des flächigen Fasergebildes unmittelbar vor Schritt (ii) beträgt vorzugsweise mindestens 10 Gew.-%, besonders bevorzugt mindestens 25 Gew.-%, insbesondere bevorzugt mindestens 35 Gew.-%, beispielsweise mindestens 50 Gew.-%. Je höher der Anteil der Recyclingfassern, desto mehr Bindemittel und Fasermaterial können eingespart werden. Vorzugsweise beträgt der vorstehend definierte Massenanteil der Recyclingfasern nicht mehr als 95 Gew.-%, vorzugsweise nicht mehr als 80 Gew.-%, insbesondere bevorzugt nicht mehr als 70 Gew.-%.

Gemäß einer bevorzugten Ausgestaltung des Verfahrens enthält das in Schritt (i) bereitgestellte flächige Fasergebilde zumindest teilweise Recyclingfasern, die in einem (vorangegangenem) Schritt (ii) des Konfektionierens erhalten wurden. Dadurch, dass der Schritt des Konfektionierens (ii) vor dem Schritt des Ausrüstens (iii) erfolgt, kann nicht nur Bindemittel eingespart werden, sondern es können auch die beim Konfektionieren (ii) anfallenden Recyclingfasern wiederverwertet werden, insbesondere zur Herstellung des erfindungsgemäß verwendeten flächigen Fasergebildes (1). Durch diese Ausführungsform können die Umweltfreundlichkeit und Ressourcenschonung des erfindungsgemäßen Verfahrens besonders gesteigert werden. Dabei muss der Recyclingkreislauf nicht zwingend geschlossen sein. Das heißt, es können Recyclingfasern aus der Herstellung von Halbzeug verschiedener Art (beispielsweise Halbzeug mit anderen Abmessungen/Dimensionen) verwendet werden. Vorzugsweise werden Recyclingfasern aus der Herstellung von Halbzeug mit höherem Verschnittanteil bzw. höherem Anteil der in (dem vorangegangenem) Schritt (ii) anfallenden Recyclingfasern für das in Schritt (i) bereitgestellte flächige Fasergebilde zur Herstellung von Halbzeug mit geringerem Verschnittanteil bzw. niedrigerem Anteil der in Schritt (ii) anfallenden Recyclingfasern verwendet. Dies hat einen positiven Einfluss auf das Downcycling der Fasern.

Das aus dem erfindungsgemäßen Verfahren erhältliche Halbzeug ist dazu geeignet, durch Warmpressen zu einem Bauteil weiterverarbeitet zu werden. Diejenigen Bereiche beziehungsweise Aussparungen des vorkonfektionierten Fasergebildes/Halbzeugs/Bauteils, welche bis zur vollendeten Fertigung des Bauteils vom noch nicht vorkonfektionierten flächigen Fasergebilde abgetrennt werden sollen, bilden den sogenannten Verschnittbereich. Es ist möglich, bereits in Schritt (ii) den Verschnittbereich vollständig abzutrennen. Dadurch wird der Anteil an Abfallfasern, der mit Bindemittel ausgerüstet wird, minimiert und der Anteil an Recyclingfasern, der zur Herstellung eines flächigen Fasergebildes wiederverwertet werden kann, maximiert.

Gemäß einer bevorzugten Ausführungsform des erfindungsgemäßen Verfahrens umfasst der Schritt (ii) des Konfektionierens einen Schritt des Lochens des flächigen Fasergebildes innerhalb des mindestens einen Verschnittbereiches. Durch lediglich teilweises Abtrennen des Verschnittbereiches kann zwar ein gewisser Anteil der als Abfall anfallenden Fasern nicht wiederverwertet werden, allerdings kann es aus verfahrenstechnischen Gründen vorteilhaft sein, wenn der ursprüngliche äußere Rand des flächigen Fasergebildes erhalten bleibt. Sofern ausschließlich innerhalb des Verschnittbereiches gelocht wird, bleibt der ursprüngliche äußere Rand des flächigen Fasergebildes erhalten.

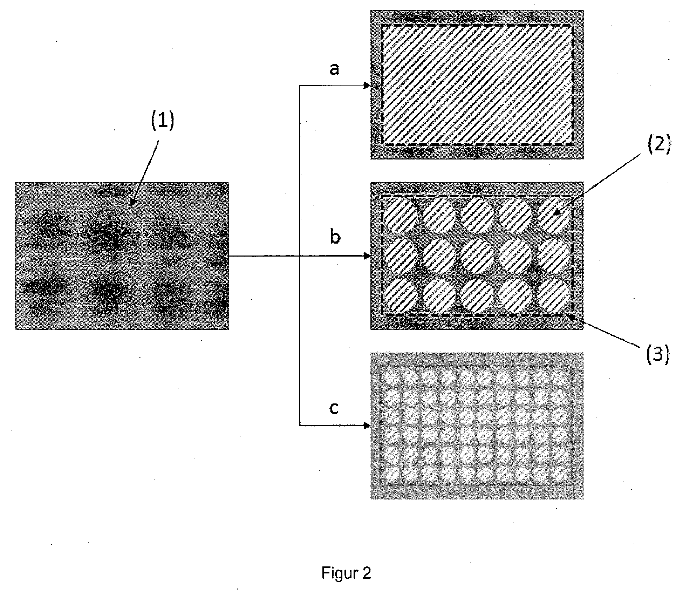

In einer bevorzugten Ausgestaltung des erfindungsgemäßen Verfahrens wird innerhalb des mindestens einen Verschnittbereiches eine Mehrzahl an Aussparungen ausgelocht. Sofern der oder die Verschnittbereiche einen hohen Anteil des nicht konfektionierten flächigen Fasergebildes einnehmen, können bei vollständigem Abtrennen des Verschnittbereiches in Schritt (ii) hinsichtlich der Stabilität beziehungsweise der Weiterverarbeitbarkeit des Halbzeugs Schwierigkeiten auftreten. Wird allerdings lediglich eine Mehrzahl von Aussparungen innerhalb des Verschnittbereiches ausgelocht, können die Struktur und Stabilität des Halbzeugs im Wesentlichen gewahrt werden. Durch das Netzwerk aus verbleibenden Fasern im Verschnittbereich wird das vorkonfektionierte Fasergebilde beziehungsweise das vorkonfektionierte Halbzeug stabilisiert (siehe Figuren 2b und c). Der Anteil der Gesamtflächen der Aussparungen innerhalb der Verschnittbereiche an der Gesamtfläche der Verschnittbereiche mit Aussparungen beträgt vorzugsweise mindestens 50 %, besonders bevorzugt mindestens 75 %, insbesondere bevorzugt mindestens 80 %, am meisten bevorzugt mindestens 90 %.

Die Form der Aussparungen unterliegt keiner besonderen Einschränkung. Für die Stabilität des Halbzeugs hat sich eine polygonale Struktur der Aussparungen als vorteilhaft erwiesen. Beispielsweise können die Aussparungen dreieckig, viereckig, fünfeckig, sechseckig und auch kreisförmig sein. Gemäß einer besonders bevorzugten Ausfürhungsform sind die Aussparungen kreisförmig. Die Aussparungen können auch voneinander verschiedene Formen aufweisen (z. B. Vierecke und Kreise).

Die Größe der Aussparungen unterliegt keiner besonderen Einschränkung. Bevorzugt weisen die Aussparungen einen maximalen Durchmesser von 1 bis 30 cm, besonders bevorzugt 5 bis 25, insbesondere bevorzugt 10 bis 20 cm auf (vergleiche Figur 2b und c). Bei einem maximalen Durchmesser innerhalb dieses Bereiches kann sowohl eine hohe Wirtschaftlichkeit des Verfahrens als auch eine hohe Stabilität des vorkonfektionierten Fasergebildes/des vorkonfektionierten Halbzeugs gewährleistet werden. Der maximale Durchmesser ist die größte Längendimension der Aussparung.

Es ist möglich, in Schritt (ii) sämtliche der Verschnittbereiche zu lochen, um in jedem der Verschnittbereiche eine Mehrzahl von Aussparungen zu erzeugen. Genauso kann bei mehreren voneinander getrennten Verschnittbereichen in einem Teil der Verschnittbereiche eine Mehrzahl von Aussparungen ausgelocht werden und ein anderer Teil der Verschnittbereiche, beispielsweise durch Ausschneiden, Beschneiden und/oder Lochen, vollständig abgetrennt werden.

In einer bevorzugten Ausgestaltung der Erfindung beträgt der Massenanteil der Recyclingfasern, bezogen auf die Gesamtmasse des nicht konfektionierten flächigen Fasergebildes, mindestens 10 Gew.-%, vorzugsweise mindestens 30 Gew.-%, besonders bevorzugt mindestens 50 Gew.-%.

Wie bereits vorstehend erläutert, können die anfallenden Recyclingfasern, vorzugsweise zur Herstellung eines in Schritt (i) bereitgestellten flächigen Fasergebildes, wiederverwertet/recycelt werden. Vorzugsweise werden mindestens 10 Gew.-%, besonders bevorzugt mindestens 25 Gew.-%, insbesondere bevorzugt mindestens 40 Gew.-% und noch mehr bevorzugt mindestens 50 Gew.-% der Recyclingfasern wiederverwertet.

Das Ausrüsten (iii) des vorkonfektionierten flächigen Fasergebildes aus Schritt (ii) unterliegt keiner besonderen Einschränkung. In einer bevorzugten Ausgestaltung kann sich an Schritt (iii) ein Schritt des Oberflächenbeschichtens des behandelten vorkonfektionierten flächigen Fasergebildes anschließen.

Für Verfahrensschritt (iii) geeignet sind bekannte Massnahmen zur Herstellung von gebundenen Fasergebilden bzw. Faservliesen. Hierbei wird mindestens ein Bindemittel vorzugsweise in einer Menge von 0,5 bis 40 Gew.-%, besonders bevorzugt 15 bis 30 Gew.-%, bezogen auf den Feststoffgehalt des flächenförmigen Fasergebildes, eingesetzt. Das Bindemittel dient zur Verfestigung des Fasergebildes. Es kann beispielsweise durch Sprühen, Tauchen, Imprägnieren oder Pflatschen oder durch Behandeln des Fasergebildes mit einem Schaum angewendet werden.

Als Bindemittel geeignet sind unter anderem thermisch härtbare Bindemittel als auch strahlungshärtbare Bindemittel. Zudem können duroplastische beziehungsweise thermoplastische Bindemittel verwendet werden.

Thermisch härtbare Bindemittel für die Verfestigung von Fasergebilden bzw. Faservliesen sind bekannt. Sie werden beispielsweise in den zum Stand der Technik gehörenden Druckschriften beschrieben, wie US 4 076 917, EP-A-0 445 578, EP-A-0 583 086 sowie EP-A-0 651 088.

Als thermisch härtbare Bindemittel kommen neben den Bindemitteln, die in den obengenannten Druckschriften beschrieben sind, sämtliche härtbaren Bindemittel in Betracht, die zur Verfestigung von Fasergebilden bzw. Faservliesen in der Literatur beschrieben sind und/oder die für diesen Zweck in der Praxis verwendet werden wie thermisch härtbare Harze auf Basis von Phenol und Formaldehyd, Melamin-Formaldehyd-Harze, Harnstoff-Formaldehyd-Harze, Ein- und Zweikomponentensysteme auf Basis von Epoxidharzen oder Polyurethanen, Polyacrylate, Polymethacrylate, Polyvinylacetate, Styrol-Acrylat-Copolymerisat-Dispersionen, Styrol-Methacrylat-Copolymerisat-Dispersionen, Styrol-Butadien-(Meth)Acrylsäure-Copolymerisat-Dispersionen sowie Gemischen aus den genannten Dispersionen mit einer Gemisch aus einer Polycarbonsäure und einem mehrwertigen Alkohol als Vernetzungskomponente.

Geeignet sind zudem die aus DE-A-199 17 965 bekannten strahlungshärtbaren Bindemittel.

Die Bindemittel können gegebenenfalls Zusatzstoffe enthalten, z.B. Hydrophobierungsmittel wie Siloxane, Entschäumer, Füllstoffe wie Perlite, Brandschutzmittel wie Aluminiumsilikate, Aluminiumhydroxide, Borate und/oder Phosphate, Stärke oder Farbmittel.

Die härtbaren Bindemittel, insbesondere jene, die gegebenenfalls zum Beschichten eingesetzt werden, enthalten vorzugsweise ein Farbmittel. Geeignete Farbmittel sind beispielsweise Pigmentpräparationen, insbesondere wässrige Pigmentpräparationen. Die Farbmittel werden beispielsweise in einer Menge von 0,1 bis 50, vorzugsweise 0,5 bis 10 Gew.-%, bezogen auf das Bindemittel, verwendet. Es ist auch möglich, das in der Verfahrensstufe (iii) eingesetzte Bindemittel mit einem Farbmittel einzufärben.

Das mit einem Bindemittel ausgerüstete erfindungsgemäße flächenförmige Fasergebilde wird gegebenenfalls - beispielsweise durch Trocknen - auf einen Feuchtegehalt von 4 bis 30 Gew.-% eingestellt. Das derart eingestellte Fasergebilde kann zudem nachfolgend, beispielsweise in einem Schritt (iii.2), mit einem Bindemittel beschichtet werden. Im Gegensatz zur Verfestigung von Fasergebilden - und mithin auch im Gegensatz zum Verfahrensschritt (iii) - soll das Bindemittel, das für ein wie vorstehend erwähntes Beschichten angewendet wird, im Wesentlichen an der Oberfläche des faserförmigen Flächengebildes verbleiben oder nur zu einem geringen Teil darin eindringen. Diese Beschichtung wird vorzugsweise dadurch erreicht, dass man für das Beschichten ein schaumförmiges, härtbares Bindemittel oder ein pastenförmiges, härtbares Bindemittel einsetzt.

Gemäß einer bevorzugten Ausführungsform umfasst das Verfahren weiter den Schritt
(iv) Aufrollen des vorkonfektionierten Halbzeuges zu einer Rolle. Wie bereits vorstehend erläutert, bringt die Rollenform insbesondere verfahrenstechnische Vorteile mit sich, reduziert aber auch die Oberfläche des Halbzeugs und vermindert dadurch die Gefahr der Austrocknung.

Sofern ein großer Anteil des nicht vorkonfektionierten flächigen Fasergebildes in Schritt (ii) abgetrennt wird, kann es unter Umständen schwierig sein, das vorkonfektionierte flächige Fasergebilde bzw. das vorkonfektionierte Halbzeug auf eine Rolle aufzuwickeln. Dieses Problem kann beispielsweise dadurch umgangen werden, dass innerhalb des mindestens einen Verschnittbereiches eine Mehrzahl von Aussparungen ausgelocht wird (vgl. Figuren 2b und c). Wie bereits vorstehend erläutert, kann durch diese Vorgehensweise die Struktur und Stabilität des vorstrukturierten Flächengebildes bzw. des Halbzeugs erhalten bleiben, sodass ein Aufwickeln zu einer Rolle problemlos möglich ist. Alternativ oder ergänzend dazu kann eine Rolle dadurch stabilisiert werden, dass das vorkonfektionierte Fasergebilde/das Halbzeug vor dem Aufrollen auf ein Trennblatt gelegt wird. Das Trennblatt erhöht die Stabilität der Rolle und kann beispielsweise aus beschichtetem oder unbeschichtetem Papier oder Kunststoff bestehen.

Nach Schritt (iii) und gegebenenfalls vor Schritt (iv) wird das Halbzeug vorzugsweise auf einen Restfeuchtegehalt von 4 bis 30 Gew.-% getrocknet. Bei Verwendung eines thermoplastischen Harzes wird vorzugsweise auf 10 bis 25 Gew.-%, besonders bevorzugt auf 15 bis 20 Gew.-% getrocknet; bei Verwendung eines duroplastischen Harzes wird vorzugsweise auf 4 bis 20 Gew.-%, besonders bevorzugt auf 5 bis 10 Gew.-% getrocknet. Diese Feuchtigkeitsgehalte sind für die Weiterverarbeitung des Halbzeugs zu einem Bauteil ideal.

Der Trocknungsschritt wird vorzugsweise bei einer Temperatur durchgeführt, bei der die Bindemittel noch nicht gehärtet werden, d. h. die Temperatur liegt unterhalb der Vernetzungstemperatur der Bindemittel. Die Trocknungstemperatur beträgt vorzugsweise 50°C bis 200°C. Dadurch, dass erfindungsgemäß der Schritt des Konfektionierens (ii) bereits vor dem Ausrüsten (iii) erfolgt, wird eine geringere Menge an Bindemittel benötigt. Zudem ist beim Trocknen ein geringerer Energieeintrag erforderlich. Sofern das Verfahren einen Schritt (iii.2) des Beschichtens einschließt, kann ein Bauteil erhalten werden, in dem die einzelnen Fasern des Fasergebildes nicht oder kaum mehr zu erkennen sind.

Gegebenenfalls kann nach dem Trocknen und vor Schritt (iv) das Halbzeug nachkonfektioniert werden. Das Nachkonfektionieren kann grundsätzlich mit den gleichen Mitteln wie Schritt (ii) durchgeführt werden. Sofern das vorkonfektionierte Halbzeug in Bahnenform mit Wiederholungseinheiten bereitgestellt wird, kann das Nachkonfektionieren das Trennen der jeweiligen Einheiten entlang der Abgrenzung umfassen, sodass eine Mehrzahl von vorkonfektionierten Halbzeugen, beispielsweise in Mattenform, erhalten wird.

In einer bevorzugten Ausgestaltung umfasst das Verfahren weiter den Schritt
(v) Bereitstellen des vorkonfektionierten Halbzeuges in einem Behälter mit Luftfeuchteregulierung. Wie bereits vorstehend erläutert neigt Halbzeug auf Grundlage von flächigen Fasergebilden und einem Bindemittel zum Austrocknen. Durch Bereitstellen des vorkonfektionierten Halbzeuges in einem Behälter mit Luftfeuchteregulierung kann die Lagerfähigkeit des Halbzeugs erhöht werden. Geeignete Maßnahmen zur Luftfeuchteregulierung sind insbesondere eine luftdichte oder im Wesentlichen luftdichte Verpackung. Alternativ oder ergänzend dazu ist es möglich, ein luftfeuchteregulierendes Mittel in den Behälter einzubringen. Der Behälter weist vorzugsweise eine Öffnung zur Entnahme des Halbzeugs, beispielsweise in Schlitzform, auf. Dadurch kann der Feuchtigkeitsverlust minimiert und somit das Austrocknen des Halbzeugs verhindert oder zumindest hinausgezögert werden.

In einem weiteren Aspekt betrifft die vorliegende Erfindung ein Verfahren zur Herstellung eines Bauteils, umfassend das vorstehend definierte erfindungsgemäße Verfahren zur Herstellung eines vorkonfektionierten Halbzeugs, und weiter umfassend den Schritt
(vi) Warmpressen des vorkonfektionierten Halbzeuges in einer Warmpressanlage.

Das Halbzeug kann in dem Betrieb, in dem es hergestellt wurde, oder auch, nach einem Transport zu einem Hersteller von Bauteilen, an einem anderen Standort zu Bauteilen verarbeitet werden. Das Halbzeug wird zu diesem Zweck in einer Warmpressanlage warmgepresst. Dabei wird das Halbzeug vorzugsweise unter Verformen auf eine Temperatur erhitzt, die oberhalb der Temperatur liegt, bei der die Bindemittel vernetzen. In Abhängigkeit von der Art des Bindemittels und der Dauer des Erhitzens benötigt man für die Herstellung der Bauteile unterschiedliche Temperaturen. Das Halbzeug wird vorzugsweise zur Formgebung und Härtung der Bindemittel in der Warmpressanlage auf eine Temperatur in dem Bereich von 100 bis 260 °C, beispielsweise 180 bis 220 °C, erhitzt.

Falls in Schritt (ii) ein strahlungshärtbares Bindemittel verwendet wurde, kann die Härtung des Bindemittels gegebenenfalls zusätzlich oder stattdessen auch durch Einwirkung von energiereicher Strahlung erfolgen, wobei hier elektromagnetische Strahlung im Wellenlängenbereich von 760 nm bis 2,5 µm zur Anwendung gelangt. Als Strahlungsquellen für die Strahlungshärtung eignen sich beispielsweise Quecksilber-Niederdruckstrahler, -Mitteldruckstrahler sowie Leuchtstoffröhren, Impulsstrahler, Metallhalogenidstrahler oder Eximerstrahler.

Die Warmpressanlage kann derart mit einem Mittel zum Zerteilen versehen sein, dass gleichzeitig mit dem Warmpressen die Verschnittbereiche des Halbzeugs abgetrennt werden. Die Verschnittbereiche werden in diesem Fall nach dem Warmpressen von dem Bauteil abgetrennt. Es ist allerdings ebenso möglich, die Verschnittbereiche bereits vor dem Warmpressen von dem vorkonfektionierten Halbzeug abzutrennen, beispielsweise mithilfe einer Brückenstanze.

In einer bevorzugten Ausgestaltung des erfindungsgemäßen Verfahrens zur Herstellung eines Bauteils wird das vorkonfektionierte Halbzeug in Bahnenform bereitgestellt und umfasst sich wiederholende Einheiten, die voneinander abgegrenzt sind. In diesem Fall umfasst das Verfahren vorzugsweise, vor und/oder nach dem Schritt des Warmpressens (vi), den Schritt
(vii) Trennen der jeweiligen Einheiten entlang der Abgrenzung.

Schritt (vii) unterliegt keiner besonderen Einschränkung und kann mittels jedem zum Durchtrennen von Halbzeug geeigneten Mitteln durchgeführt werden. Vorzugsweise erfolgt Schritt (vii) mittels eines Querschneiders.

Gemäß einer bevorzugten Ausführungsform des erfindungsgemäßen Verfahrens zur Herstellung eines Bauteils ist das vorkonfektionierte Halbzeug in einem Behälter mit Luftfeuchteregulierung bereitgestellt und wird das vorkonfektionierte Halbzeug aus dem Behälter der Warmpressanlage oder einer vorangestellten Schneideanlage zugeführt. Grundsätzlich ist es möglich, dass das vorkonfektionierte Halbzeug in Form von Matten in dem Behälter mit Luftfeuchteregulierung bereitgestellt ist und direkt dem Warmpressen zugeführt wird. Genauso kann das Halbzeug in Bahnen- oder Rollenform mit sich wiederholenden Einheiten bereitgestellt werden und direkt der Warmpressanlage zugeführt werden, ohne dass das jeweilige Einzelteil der Bahn/Rolle vorher entlang der Abgrenzung abgetrennt werden muss, denn das Abtrennen kann gleichzeitig mit oder unmittelbar vor dem Schritt des Warmpressens erfolgen, wie vorstehend für das Abtrennen der Verschnittbereiche beschrieben wurde.

Man erhält aus dem erfindungsgemäßen Verfahren ausgehärtete, starre Bauteile, die je nach verwendetem Bindemittel duroplastische beziehungsweise thermoplastische Eigenschaften haben und eine kratzfeste Oberfläche aufweisen. Der Vernetzungsgrad der Bindemittel beträgt meistens mehr als 50, bevorzugt mehr als 90 Gew.-%. Die Bauteile nehmen in Abhängigkeit von den eingesetzten Fasern und den Klimabedingungen unterschiedliche Mengen an Feuchtigkeit auf. Sie haben eine optimale Nass- und Wärmestandfestigkeit. Sie haben beispielsweise eine Dichte von 0,4 bis 1,8 g/cm³, vorzugsweise von 0,45 bis 1,1 g/cm³.

Bauteile, die nach dem erfindungsgemäßen Verfahren erhältlich sind, können beispielsweise als Innenteile von Kraftfahrzeugen wie Türinnenverkleidungen, Armaturentafeln, Seitenholme, Hutablagen und bevorzugt Sonnen- bzw. Schiebedachrahmen, als Brillenetui, Verpackungsmaterial wie Kisten und Schachteln, im Dekobereich, als Einweggeschirr, Zubehör für Bürobedarf, als Tabletts, als Dekorteile in der Möbelindustrie, sowie für Einsätze von Schränken, Schubladen und Rückwände von Möbeln verwendet werden. Sie können beispielsweise auch als Innenteile von Schubladen oder für die Trittschalldämmung verwendet werden.

In einem weiteren Aspekt betrifft die vorliegende Erfindung ein vorkonfektioniertes Halbzeug, welches mindestens eine Aussparung innerhalb mindestens eines Verschnittbereiches aufweist und ein Bindemittel enthält. Dadurch, dass das Halbzeug mit einer oder mehreren Aussparungen versehen ist, kann Bindemittel eingespart werden. Die Ausführungen in Bezug auf das Verfahren zur Herstellung des vorkonfektionierten Halbzeugs beziehungsweise des Bauteils und die Ausführungen in Bezug auf das Halbzeug und den Behälter sind wechselseitig aufeinander anwendbar. Das erfindungsgemäße Halbzeug ist durch das erfindungsgemäße Verfahren erhältlich.

Das erfindungsgemäße vorkonfektionierte Halbzeug kann zur Herstellung eines Bauteils, insbesondere durch Warmformen, verwendet werden. Beispiele für derartige Bauteile wurden bereits vorstehend genannt.

Gemäß einer bevorzugten Ausführungsform des vorkonfektionierten Halbzeugs liegt innerhalb des mindestens einen Verschnittbereiches eine Mehrzahl von Aussparungen vor. Dadurch können, wie bereits vorstehend beschrieben, sowohl Bindemittel eingespart als auch die Stabilität und Verarbeitbarkeit des Halbzeuges gewährleistet werden. Der Anteil der Flächen der Perforierungen in den Verschnittbereichen an der Gesamtfläche der Verschnittbereiche mit Perforierungen beträgt vorzugsweise mindestens 20 %, besonders bevorzugt mindestens 40 %, insbesondere bevorzugt mindestens 60 %, am meisten bevorzugt mindestens 80 %.

Der Anteil der Aussparungen an der Fläche des Halbzeugs beträgt in einer bevorzugten Ausführungsform mindestens 10 Gew.-%, vorzugsweise mindestens 30 Gew.-%, besonders bevorzugt mindestens 50 Gew.-%, insbesondere bevorzugt mindestens 75 Gew.-%.

Die Breite des Halbzeugs kann - in Abhängigkeit von den in der Technik verfügbaren Anlagen - beispielsweise bis zu 12 m betragen, während die Dicke des Halbzeugs in dem Bereich von 1 bis 50, vorzugsweise 3 bis 10 mm betragen kann. Das Halbzeug kann beispielsweise in einzelne Matten geschnitten oder vorzugsweise in Form von Rollen gelagert werden. Die Rollenform ist unter anderem mit dem Vorteil verbunden, dass die Oberfläche des Halbzeugs minimiert und dadurch die Gefahr des Austrocknens herabgesetzt wird.

In einem weiteren Aspekt betrifft die vorliegende Erfindung einen Behälter, der das erfindungsgemäße vorkonfektionierte Halbzeug enthält, wobei der Behälter eine Luftfeuchteregulierung aufweist. Die vorstehenden Ausführungen gelten entsprechend. Vorzugsweise liegt das vorkonfektionierte Halbzeug in dem Behälter in Bahnenform, besonders bevorzugt in Rollenform vor. Der Behälter ist vorzugsweise mit einer schlitzförmigen Öffnung zur Entnahme des Halbzeugs versehen. Dadurch lässt sich das Halbzeug besonders leicht unter geringem Feuchtigkeitsverlust aus dem Behälter entnehmen.

In einer bevorzugten Ausgestaltung liegt das Halbzeug in dem Behälter in Rollenform vor und weist sich wiederholende Einheiten auf, die voneinander abgegrenzt sind. Die diesbezüglichen vorstehenden Ausführungen gelten entsprechend.
Figur 1 zeigt beispielhaft bevorzugte Ausführungsformen des Konfektionierungsschrittes (ii) des erfindungsgemäßen Verfahrens, wobei die Aussparungen (2) verschiedene Formen aufweisen können und zum Beispiel (a) durch Lochen oder (b) und (c) durch Beschneiden des flächenförmigen Fasergebildes (1) erzielt werden können.
Figur 2 zeigt beispielhaft bevorzugte Ausführungsformen des Konfektionierungsschrittes (ii) des erfindungsgemäßen Verfahrens, wobei der gesamte Verschnittbereich (3) entfernt werden kann (siehe Figur 2a), so dass die Aussparung (2) den gesamten Verschnittbereich (3) einnimmt, oder innerhalb des Verschnittbereiches eine Mehrzahl von Aussparungen ausgelocht werden kann (siehe Figur 2b und c).

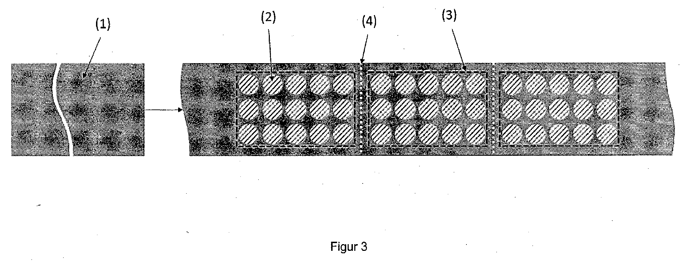

Figur 3 zeigt beispielhaft eine bevorzugte Ausführungsformen des Konfektionierungsschrittes (ii) des erfindungsgemäßen Verfahrens, wobei das flächige Fasergebilde (1) in Bahnenform bereitgestellt wird und Schritt (ii) des Konfektionierens in sich wiederholende, durch mindestens eine Abgrenzung (4) voneinander abgegrenzte Einheiten umfasst.
Figur 4 zeigt beispielhaft eine bevorzugte Ausführungsformen des Konfektionierungsschrittes (ii) des erfindungsgemäßen Verfahrens, wobei das flächige Fasergebilde in Rollenform (6) bereitgestellt wird, Schritt (ii) des Konfektionierens mithilfe einer Brückenstanze mit Stanzwerkzeug (5) erfolgt und das vorkonfektionierte flächige Fasergebilde zu einer Rolle (7) aufgewickelt wird.

Durch das erfindungsgemäße Verfahren kann der Bedarf an Fasergebilde und Bindemittel, der zur Herstellung eines Bauteils erforderlich ist, deutlich herabgesenkt werden. Zudem muss nach dem Warmpressen weniger Verschnitt entsorgt werden. Die in Schritt (ii) anfallenden Recyclingfasern müssen nicht kostspielig entsorgt werden, sondern können wiederverwertet werden. Des Weiteren reduziert sich der Energiebedarf, weil durch die geringere Menge an Bindemittel/Harz eine geringere Trocknungsenergie nötig ist.

Darüber hinaus wird bei Herstellung des Halbzeugs in Bahnenform mit sich wiederholenenden, voneinander abgegrenzten Einheiten die Durchführung des Schritts (iii) des Ausrüstens einfacher handhabbar. Wird das Halbzeug in Form einer Rolle bereitgestellt, reduziert sich die Gefahr der Austrocknung. Zudem kann die Rolle besonders einfach verpackt werden. Darüber hinaus kann bei Bereitstellung der Rolle in einem Behälter mit Luftfeuchteregulierung die Gefahr des Austrocknens des Halbzeugs weiter verringert werden, wodurch bei statistischer Betrachtung die Effizienz und Ressourcenschonung des erfindungsgemäßen Verfahrens erhöht werden kann.

### Bezugszeichenliste

- 1: Flächiges Fasergebilde
- 2: Aussparungen
- 3: Verschnittbereich
- 4: Abgrenzung
- 5: Stanzwerkzeug
- 6: Flächiges Fasergebilde in Rollenform
- 7: Konfektioniertes flächiges Fasergebilde in Rollenform

## Patentansprüche

1. Verfahren zur Herstellung von vorkonfektioniertem Halbzeug, umfassend die Schritte
(i) Bereitstellen eines flächigen Fasergebildes,
(ii) Konfektionieren des flächigen Fasergebildes durch Entfernen von Fasern innerhalb mindestens eines Verschnittbereiches, um Recyclingfasern und ein vorkonfektioniertes flächiges Fasergebilde mit mindestens einer Aussparung zu erhalten und
(iii) Ausrüsten des aus Schritt (ii) erhaltenen vorkonfektionierten flächigen Fasergebildes mit einem Bindemittel, um das vorkonfektionierte Halbzeug zu erhalten.

2. Verfahren nach Anspruch 1, wobei
das flächige Fasergebilde in Schritt (i) in Bahnenform bereitgestellt wird und der Schritt (ii) das Konfektionieren in sich wiederholende, voneinander abgegrenzte Einheiten umfasst.

3. Verfahren nach Anspruch 1 oder 2, weiter umfassend den Schritt
(iv) Aufrollen des vorkonfektionierten Halbzeuges zu einer Rolle.

4. Verfahren nach einem der Ansprüche 1 bis 3, weiter umfassend den Schritt
(v) Bereitstellen des vorkonfektionierten Halbzeuges in einem Behälter mit Luftfeuchteregulierung.

5. Verfahren nach einem der Ansprüche 1 bis 4, wobei der Schritt (ii) des Konfektionierens mindestens einen Schritt des Lochens des flächigen Fasergebildes innerhalb des mindestens eines Verschnittbereiches umfasst.

6. Verfahren nach Anspruch 5, wobei innerhalb des mindestens einen Verschnittbereiches eine Mehrzahl von Aussparungen ausgelocht wird.

7. Verfahren nach einem der Ansprüche 1 bis 6, wobei der Massenanteil der Recyclingfasern, bezogen auf die Gesamtmasse des flächigen Fasergebildes, mindestens 10 Gew.-% beträgt.

8. Verfahren nach einem der Ansprüche 1 bis 7, wobei das in Schritt (i) bereitgestellte flächige Fasergebilde zumindest teilweise Recyclingfasern enthält, die in einem Schritt (ii) des Konfektionierens erhalten wurden.

9. Verfahren zur Herstellung eines Bauteils, umfassend das Verfahren zur Herstellung von vorkonfektioniertem Halbzeug nach einem der Ansprüche 1 bis 8, und weiter umfassend den Schritt
(vi) Warmpressen des vorkonfektionierten Halbzeuges in einer Warmpressanlage.

10. Verfahren zur Herstellung eines Bauteils nach Anspruch 9, wobei das vorkonfektionierte Halbzeug in einem Behälter mit Luftfeuchteregulierung bereitgestellt wird, und wobei das vorkonfektionierte Halbzeug aus dem Behälter der Warmpressanlage oder einer vorangestellten Schneideanlage zugeführt wird.

11. Verfahren nach Anspruch 10, wobei das vorkonfektionierte Halbzeug in Bahnenform bereitgestellt wird und sich wiederholende Einheiten umfasst, die voneinander abgegrenzt sind, weiter umfassend, vor und/oder nach dem Schritt des Warmpressens (vi), den Schritt
(vii) Trennen der jeweiligen Einheiten entlang der Abgrenzung.

12. Vorkonfektioniertes Halbzeug, welches mindestens eine Aussparung innerhalb mindestens eines Verschnittbereiches aufweist und ein Bindemittel enthält.

13. Vorkonfektioniertes Halbzeug nach Anspruch 12,
wobei der mindestens eine Verschnittbereich eine Mehrzahl von Aussparungen aufweist.

14. Behälter, enthaltend ein vorkonfektioniertes Halbzeug nach Anspruch 12 oder 13,
wobei der Behälter eine Luftfeuchteregulierung aufweist.

15. Verwendung von vorkonfektioniertem Halbzeug, erhältlich durch das Verfahren nach einem der Ansprüche 1 bis 8, zur Herstellung eines Bauteils.
